# EUROPÄISCHE PATENTANMELDUNG

(11) **EP 1 880 635 A1**
(43) Veröffentlichungstag der Anmeldung: **23.01.2008**
(21) Anmeldenummer: 07010610.9
(22) Anmeldetag: 29.05.2007
(51) Int. Cl.: A47B 31/00, A47B 31/02, A47J 27/14, A47J 39/00

(54) **Speisentransportwagen**

(30) Priorität: 18.07.2006 DE 102006034259
(71) Anmelder: Rieber GmbH & Co. KG, 72770 Reutlingen (DE)
(72) Erfinder: Rieber, Heinrich, 72770 Reutlingen (DE)
(74) Vertreter: Patentanwälte Ruff, Wilhelm, Beier, Dauster & Partner

(57) **Zusammenfassung**

Die Erfindung betrifft einen Servierwagen (1) mit mindestens einer Arbeitsfläche (5, 5', 5") und mindestens einer unterhalb der Arbeitsfläche (5, 5', 5"), parallel zu dieser angeordneten Abstellfläche (6, 6'), wobei in die Arbeitsfläche (5, 5', 5") mindestens eine Einrichtung zum Warmhalten, Zubereiten und/oder Kühlen von Speisen integriert ist.

## Beschreibung

Die Erfindung betrifft einen Servierwagen.

Servierwagen, speziell für die Gemeinschaftsverpflegung, mit einer Arbeitsfläche, auf welcher ein Behälter für Speisen platziert werden kann, sind allgemein bekannt. Die Arbeitsfläche befindet sich vorteilhafterweise in einer Arbeitshöhe eines erwachsenen Menschen, d.h. in etwa auf einer Höhe von 90cm - 100cm, insbesondere von ca. 95cm. Um die Kapazität des Servierwagens zu erhöhen, ist es weiter bekannt, zusätzliche Abstellflächen unterhalb der Arbeitsfläche vorzusehen.

Die Speisen werden im Regelfall in einer Küche zubereitet und in Behältern angerichtet, welche dann zum Ausgeben der Speisen auf dem Servierwagen abgestellt werden.

Daneben ist es bekannt, Kochplatten, Warmhalteplatten oder Kühlmittel auf der Arbeitsfläche anzuordnen, durch welche die angerichteten Speisen zubereitet oder temperiert werden können.

In der DE 23 28 124 A1 ist ein beheizbarer Serviertisch mit einer oder mehreren Abstellplatten beschrieben. Der Serviertisch weist ein Gestell sowie eine obere Abstellplatte und eine untere Abstellplatte auf. Die Abstellplatte, die aus zwei Abstellplattenteilen gebildet wird, weist Heizplatten auf. Die Abstellplatten sind vorzugsweise aus Kunststoff oder Pressholz hergestellt.

In der US 2,520,543 ist ein Tisch, ein Servierwagen oder dergleichen beschrieben. Der Tisch weist mehrere Klappen auf, die in einer Arbeitsposition im Wesentlichen horizontal ausgerichtet angeordnet sind, so dass sie eine Arbeitsfläche bilden. Außerdem ist eine untere Ablagefläche vorgesehen. Im oberen Bereich des Servierwagens ist eine Kammer vorgesehen, in der Heizelemente angeordnet sind. In der oberen Begrenzung der Kammer sind mehrere Ausnehmungen vorgesehen, in denen Behälter angeordnet sind. Die Behälter sind aus hitzebeständigem Glas hergestellt.

Es ist Aufgabe der vorliegenden Erfindung, einen Servierwagen zu schaffen, welcher hohen Ansprüchen an Belastbarkeit, Flexibilität und Ästhetik genügt.

Diese Aufgabe wird gelöst durch einen Gegenstand mit den Merkmalen des Anspruchs 1. Weitere Vorteile der Erfindung ergeben sich aus den Unteransprüchen.

Die Aufgabe wird gelöst durch einen Servierwagen mit mindestens einer Arbeitsfläche und mindestens einer unterhalb der Arbeitsfläche, parallel zu dieser angeordneten Abstellfläche, wobei in die Arbeitsfläche mindestens eine Einrichtung zum Warmhalten, Zubereiten und/oder Kühlen von Speisen integriert ist und wobei die Einrichtung einen Behälter aus einem Mehrschichtmaterial mit hoher Wärmeleitfähigkeit aufweist.

Wird eine Kochplatte oder ein ähnliches Mittel zum Erwärmen oder Zubereiten von Speisen auf die Arbeitsfläche gestellt, so verändert sich die Arbeitshöhe. Durch die Integration des Mittels in die Arbeitsfläche bleibt die Höhe der Arbeitsfläche dagegen erhalten. Weiter ist durch die Integration des Mittels eine sichere Verbindung mit dem Servierwagen auch bei einem Verschieben des Wagens gewährleistet. Ein erfindungsgemäßer Servierwagen ist daher vielfältig sowohl zum Transport als auch zum Zubereiten und zum Ausgeben von Speisen einsetzbar. In vielen Anwendungsfällen ist daher ein einziger Servierwagen für die alle Anwendungen in einem Restaurant oder in der Gemeinschaftsverpflegung ausreichend. In einer Ausführungsform weist der Servierwagen einen Transportgriff oder mehrere Transportgriffe auf, durch welche ein einfaches Bewegen des Wagens möglich ist. In einer weiteren Ausführungsform sind ein Rahmen des Servierwagens, die Abstellfläche und/oder der Transportgriff aus Edelstahl. Durch die Verwendung von Edelstahl wird eine hohe Festigkeit sowie eine gute Ästhetik erzielt.

Ein Behälter aus einem Mehrschichtmaterial mit hoher Wärmeleitfähigkeit ist beispielsweise in der nachveröffentlichten DE 20 2006 005 171 beschrieben, deren Inhalt hiermit in diese Anmeldung aufgenommen wird. Das Mehrschichtmaterial besteht vorzugsweise aus drei aufeinander befestigten Schichten, nämlich einer dicken Zwischenschicht aus gut wärmeleitendem Material wie Aluminium, Kupfer oder Stahl, die zwischen zwei wesentlich dünneren Deckschichten aus nichtrostendem Stahl angeordnet ist. Wenigstens eine dieser Deckschichten besteht in einer Ausführungsform aus ferritischem Stahl, also aus einem Werkstoff, der gut magnetisierbar ist. Dadurch ist der Behälter auch induktiv beheizbar. Die andere Schicht besteht in einer Ausführungsform aus austenitischem Stahl. Vorzugsweise bestehen beide Deckschichten aus ferritischem Stahl und die Zwischenschicht aus Aluminium. Der ferritische Stahl ist in einer Ausführungsform ein 13 - 17% Chromstahl. Das Mehrschichtmaterial hat in einer vorteilhaften Ausführungsform eine Gesamtdicke von bis zu 4mm, wobei die Deckschichten eine Dicke von bis zu 0,6mm aufweisen. Der Behälter ist in einer vorteilhaften Ausführungsform einstückig, insbesondere durch Tiefziehen, hergestellt. Vorzugsweise weist der Behälter dabei eine gewisse Tiefe auf. Die Tiefe gewährleistet eine ausreichende Stabilität auch bei einer geringen Gesamtdicke. Durch die geringe Gesamtdicke ist ein schnelles Aufheizen des Behälters möglich. Durch die Tiefe wird auch verhindert, dass Fett oder andere Flüssigkeiten beim Zubereiten der Speisen, insbesondere beim Grillen oder Braten, über den Rand des Behälters laufen.

In Weiterbildung der Erfindung ist der Behälter lösbar in eine Ausnehmung der Arbeitsfläche eingesetzt. Der Behälter kann dadurch dem Servierwagen entnommen und durch einen frischen Behälter ersetzt werden, in welchem beispielsweise frische Speisen angerichtet sind. Die Entnahme ist jedoch auch zum Reinigen von Vorteil.

In Weiterbildung der Erfindung ist der Behälter in Gastronorm-Format ausgeformt (GN-Behälter). Ein derartiger GN-Behälter ist in seiner Größe nach DIN 66075 ausgebildet. In einer Ausführungsform weist der Behälter Griffe auf. Durch die Griffe kann der Behälter einfach in den Servierwagen eingesetzt und aus diesem entnommen werden. Der GN-Behälter ist in einer weiteren Ausführungsform durch eine Haube oder einen Deckel abgedeckt.

In Weiterbildung der Erfindung ist der Behälter mit einer Antihaftschicht, insbesondere mit Polytetrafluorethylen, beschichtet. Ein derartiger Behälter eignet sich besonders zum Grillen oder Braten von Speisen.

In Weiterbildung der Erfindung ist auf der Abstellfläche unterhalb des Behälters eine Heiz- und/oder Kühleinrichtung zum Erwärmen oder Kühlen des Behälters vorgesehen. Die Abstellfläche ist dafür in einem geeigneten Abstand unterhalb der Arbeitsfläche angeordnet. Durch die Ausformung der Arbeitsfläche mit einer Ausnehmung und einem darin angeordneten Behälter, insbesondere einem GN-Behälter, aus wärmeleitfähigem Mehrschichtmaterial liegt die Unterseite des Behälters in der Nähe der mindestens nach oben abstrahlenden Heiz- oder Kühleinrichtung, so dass ein schnelles Kühlen oder Erwärmen mittels der Heiz- und/oder Kühleinrichtung möglich ist. In einer einfachsten Ausführungsform sind als Kühleinrichtung Eiswürfel vorgesehen. Die Heizvorrichtung ist beispielsweise ein Brenner, welcher durch einen geeigneten Brennstoff betreibbar ist.

In Weiterbildung der Erfindung ist der Behälter mit einer Heiz- und/oder Kühleinrichtung versehen. Dadurch wird der Behälter direkt gewärmt und/oder gekühlt. Die Heiz- und/oder Kühleinrichtung ist in einer vorteilhaften Ausführungsform derart angebracht, dass sie direkt in Kontakt mit der wärmeleitfähigen Zwischenschicht steht, so dass eine Temperatur-übertragung direkt an die wärmeleitfähige Zwischenschicht erfolgt. In einer anderen Ausführungsform ist die Heiz- und/oder Kühleinrichtung in Kontakt mit der Deckschicht. So sind beispielsweise in einer Ausführungsform zwei Behälter ineinandergestapelt, wobei zwischen den Behältern ein Kältespeicherelement eingelegt ist.

In Ausgestaltung der Erfindung weist die Kühleinrichtung einen Kompressor und einen Verdampfer, mindestens ein Peltier-Element und/oder ein herausnehmbares Kältespeicherelement auf. Dadurch ist ein gutes Kühlen über einen längeren Zeitraum möglich.

In Weiterbildung der Erfindung ist die Heizvorrichtung eine elektrische Widerstandsheizung oder ein Induktionsgenerator zur induktiven Erwärmung des Behälters. Ein Induktionskochfeld oder eine Induktionsgrillplatte ist beispielsweise in der DE 101 20 500 oder der DE 201 16 711 U1 beschrieben, deren Inhalt hiermit in diese Anmeldung aufgenommen wird. Durch die Heizeinrichtung wird der Behälter erwärmt, so dass der Behälter zum Grillen oder Braten von Speisen verwendbar ist. In einer Ausführungsform ist die Heizeinrichtung ein Induktionsgenerator, wobei ein Behälter mit mindestens einer magnetisierbaren Deckschicht mit dem Induktionsgenerator zusammenwirkt.

In einer ändern Ausführungsform ist die Einrichtung zum Warmhalten, Zubereiten und/oder Kühlen von Speisen eine beheizbare Glaskeramikkochplatte. Derartige Kochplatten haben eine hohe Hitzedurchlässigkeit und praktisch keine Wärmeausdehnung. Sie besitzen eine glatte, porenfreie Oberfläche.

In einer anderen Ausführungsform ist auf der Abstellfläche eine geschlossene Heiz- und/oder Kühlvorrichtung zum Transportieren, Lagern, Kühlen, Warmhalten und/oder Niedergaren von Speisen vorgesehen. Die Abstellfläche ist vorzugsweise aus Edelstahl und weist so eine ausreichende Festigkeit zum Transportieren und Lagern auch schwerer Gegenstände auf. Die Kühlvorrichtung ist beispielsweise ein Kühlschrank. Bei der Heizvorrichtung kann es sich um einen Ofen handeln.

In einer vorteilhaften Ausgestaltung der Erfindung umfasst die Kühlvorrichtung einen Kompressor und einen Verdampfer, wenigstens ein Peltier-Element oder ein Kältespeicherelement. Dadurch ist ein gutes Kühlen über einen längeren Zeitraum möglich.

Vorzugsweise weist der Servierwagen Transportrollen, insbesondere vier Transportrollen, auf, so das ein Verfahren des Servierwagens möglich ist. Insbesondere durch vier Transportrollen ist ein ebenes Verfahren ohne Kippen möglich. Die Transportrollen sind in einer Ausführungsform zumindest teilweise mit Feststellbremsen ausgebildet, so dass der Wagen sicher abstellbar ist.

In einer vorteilhaften Ausgestaltung der Erfindung weist der Servierwagen zwei Abstellflächen auf. Die Abstellflächen können dabei beliebige Funktionen erfüllen.

In Weiterbildung der Erfindung ist mindestens eine Abstellfläche mit einem erhöhten Rand ausgeformt. Durch den erhöhten Rand ist ein sicheres Unterbringen von Gegenständen auf der Abstellfläche auch beim Transport möglich.

Weitere Vorteile der Erfindung ergeben sich aus der nachfolgenden Beschreibung von Ausführungsbeispielen der Erfindung, die in den Zeichnungen schematisch dargestellt sind. Für gleiche Bauteile werden dabei einheitliche Bezugszeichen verwendet.

In den Zeichnungen zeigen:
- Fig. 1: eine perspektivische Darstellung eines Servierwagens mit einem einzusetzenden GN-Behälter;
- Fig. 2: eine perspektivische Darstellung eines Servierwagens mit einem Induktionskochfeld und
- Fig. 3: eine perspektivische Darstellung eines Servierwagens mit einer beheizbaren Glaskeramikkochplatte.

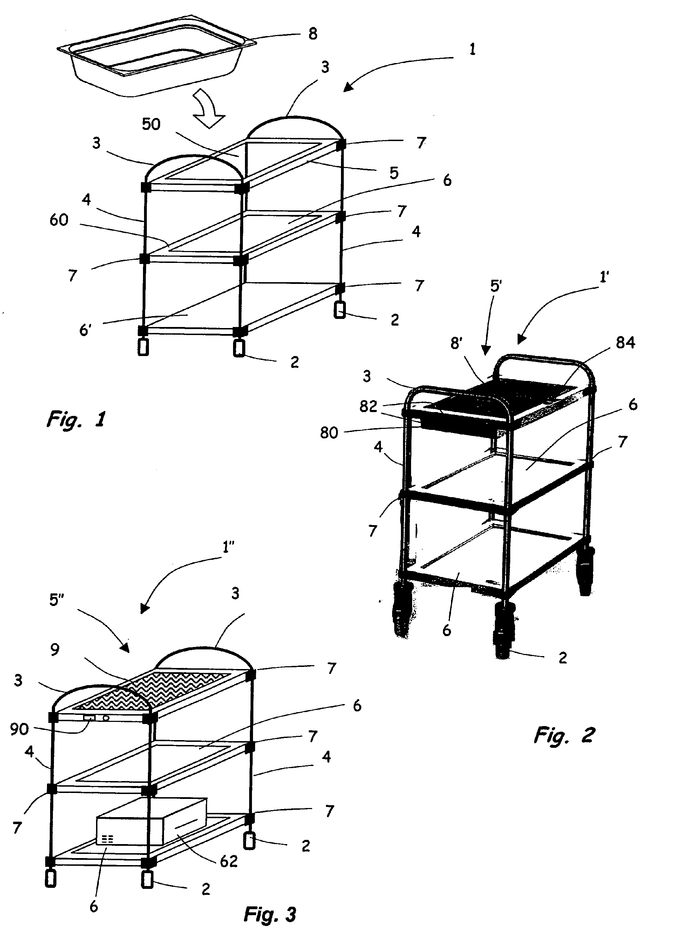

Fig. 1 zeigt schematisch einen Servierwagen 1 in einer perspektivischen Darstellung. Der Servierwagen 1 hat vier Transportrollen 2, von welchen in der Fig. 1 nur drei sichtbar sind, sowie zwei Transportgriffe 3. Der Servierwagen 1 umfasst einen Rahmen, welcher in der dargestellten Ausführungsform aus vier, im Wesentlichen vertikal angeordneten Stangen 4 aufgebaut ist. Die Transportrollen 2 sind an den unteren Enden der Stangen 4 angebracht. In der dargestellten Ausführungsform sind jeweils zwei Stangen 4 und ein zugehöriger Transportgriff 3 einstückig aus einem gebogenen Rundmaterial, insbesondere einem Edelstahlrohr, ausgeformt.

Der dargestellte Servierwagen 1 umfasst eine Arbeitsfläche 5, sowie zwei, parallel zu dieser angeordnete Abstellflächen 6, 6'. Die Abstellfläche 6 weist einen erhöhten Rand 60 auf, wohingegen die Abstellfläche 6' in der dargestellten Ausführungsform eben ist. Selbstverständlich ist eine abweichende Anordnung der Abstellflächen 6, 6' denkbar. Die Abstellflächen 6, 6' sind vorzugsweise aus Edelstahl, um eine gute Ästhetik und eine gute Festigkeit zu gewährleisten. Die Arbeitsfläche 5 und die Abstellflächen 6, 6' sind in der dargestellten Ausführungsform in der Draufsicht rechteckförmig ausgeformt. Die Arbeitsfläche 5 und die Abstellflächen 6, 6' sind an den Ecken mittels Befestigungen 7 an den Stangen 4 angebracht, wobei die Transportgriffe 3 jeweils der kürzeren Seite der Rechteckform zugeordnet sind. Durch die im Wesentlichen vertikale Anordnung der Stangen 4 ist ein guter Zugriff auf die Arbeitsfläche 5 und die Abstellflächen 6, 6' möglich.

Die in Fig. 1 dargestellte Arbeitsfläche 5 weist eine Ausnehmung 50 auf, in welche ein Gastronorm-Behälter (GN-Behälter) 8 einsetzbar ist. Dabei handelt es sich in der dargestellten Ausführungsform um einen 1/1-GN-Behälter. In einer anderen Ausführungsform sind zwei 1/2-GN-Behälter in die Ausnehmung 50 eingesetzt. Auf der Abstellfläche 6 kann eine nicht dargestellte Heiz- und/oder Kühleinrichtung zum Erwärmen oder Kühlen des GN-Behälters 8 oder dessen Inhalts vorgesehen sein, beispielsweise ein Brenner, eine Schale mit Eiswürfeln oder eine andere, geeignete Heiz- oder Kühleinrichtung. Der GN-Behälter 8 ist vorzugsweise aus wärmeleitfähigem Mehrschichtmaterial hergestellt, so dass die Temperatur von der Heiz- oder Kühleinrichtung schnell und ohne große Verluste an den Inhalt des GN-Behälters 8 übertragbar ist.

In einem anderen Ausführungsbeispiel ist in den GN-Behälter 8 ein nicht dargestelltes Kälte- oder Wärmespeicherelement einsetzbar und auf dem Kälte- oder Wärmespeicherelement ein weiterer, ebenfalls nicht dargestellter, GN-Behälter anbringbar, dessen Inhalt durch das Kälte- oder Wärmespeicherelement temperiert wird.

Fig. 2 zeigt schematisch eine weitere Ausführungsform eines erfindungsgemäßen Servierwagens 1'. Der Servierwagen 1' entspricht im Wesentlichen dem in Fig. 1 dargestellten Servierwagen 1, so dass auf eine Beschreibung gleicher Bauteile verzichtet wird.

In die Arbeitsfläche 5' des Servierwagens 1' ist eine Einrichtung umfassend einen Behälter 8' und eine Heizeinrichtung 80 integriert. Die Heizeinrichtung 80 ist umfasst ein nicht sichtbares elektrisches Widerstandsheizelement. Die Heizeinrichtung 80 ist mittels Bedienelemente 82 betätigbar, wobei ein Zustand der Heizeinrichtung durch Anzeigeelemente 84 anzeigbar ist. Der Behälter 8' ist mit der Heizeinrichtung 80 wirkverbunden, so dass der Behälter 8' durch die Heizeinrichtung 80 aufgewärmt wird. Der dargestellte Behälter 8' ist in seinen Außenmaßen als GN-Behälter ausgeformt. Der Behälter 8' ist vorzugsweise aus einem wärmeleitfähigen Mehrschichtmaterial mit einer Antihaftschicht aufgebaut. Durch das wärmeleitfähige Mehrschichtmaterial wird eine schnelle Aufheizung erreicht, so dass der Behälter 8' zum Grillen oder Braten von nicht dargestellten Speisen besonders gut geeignet ist. Durch den Rand des Behälters 8' wird verhindert, dass Fett oder Öl beim Braten auf den Servierwagen 1' oder dessen Aufstellfläche abfließt. Dadurch ist ein Einsatz in einer beliebigen Umgebung ohne Gefahr von Verschmutzungen möglich. In einer Ausführungsform ist der Behälter 8' von der Heizeinrichtung trennbar, so dass der Behälter 8' für eine einfache Reinigung des Behälters 8' entnehmbar ist. In einer anderen Ausführungsform ist der Behälter 8' fest mit der Heizeinrichtung 80 verbunden. Eine Reinigung ist bei Oberflächen des Behälters aus Polytetrafluorethylen oder Stahl jedoch ebenfalls durch geeignete Tücher einfach möglich. Für den Betrieb der Heizeinrichtung 80 ist der Servierwagen 1' über eine nicht dargestellte Leitung an eine Stromquelle anschließbar. Der Behälter 8' ist mit seinem umlaufenden Rand vorzugsweise bündig in die Arbeitsfläche 5' eingesetzt.

In einem anderen Ausführungsbeispiel umfasst die Heizeinrichtung einen Induktionsgenerator. Der Behälter besteht vorzugsweise aus einer dicken Zwischenschicht aus gut wärmeleitendem Material wie Aluminium oder Kupfer, welche zwischen zwei dünnen Deckschichten angeordnet ist. Dabei ist zumindest die untere Deckschicht vorzugsweise aus ferritischem Stahl, so dass der Behälter induktiv beheizbar ist.

In einem weiteren Ausführungsbeispiel weist die Arbeitsfläche ein Induktionskochfeld mit einer ferritischen Deckschicht auf, so dass auf dem Induktionskochfeld abgesetzte Behälter durch Kontaktwärmeübertragung unabhängig von ihren ferritischen Eigenschaften beheizbar sind.

In einem weiteren Ausführungsbeispiel ist die Heizeinrichtung 80 ein Peltier-Element, durch das der Behälter 8' und/oder dessen Inhalt je nach Stromrichtung auch gekühlt werden kann. In noch einer weiteren Ausführungsform ist anstelle der Heizeinrichtung 80 eine Kühleinrichtung vorgesehen.

Die Behälter 8, 8' gemäß den Fig. 1 und 2 sind durch nicht dargestellte Hauben oder Deckel abdeckbar. In einem weiteren Ausführungsbeispiel ist ein Schneidebrett vorgesehen, welches zumindest teilweise auf dem Behälter 8, 8' angebracht ist, und so die Einsatzmöglichkeit des Speisetransportwagens 1, 1' noch weiter verbessert.

Fig. 3 zeigt schematisch eine weitere Ausführungsform eines erfindungsgemäßen Servierwagens 1". Der Servierwagen 1" entspricht ebenfalls im Wesentlichen dem Servierwagen 1, so dass auf eine detaillierte Beschreibung der übereinstimmenden Bauteile verzichtet wird. In die Arbeitsfläche 5" des Servierwagens 1" ist eine beheizbare Glaskeramikkochplatte 9 integriert. Die Glaskeramikkochplatte 9 ist mittels Bedienelementen 90 bedienbar, wobei ein Heizzustand der Glaskeramikkochplatte 9 an der Glaskeramikkochplatte selbst anzeigbar ist. Das Glaskeramikkochfeld 9 ist mit seiner Oberfläche bündig in die Arbeitsfläche 5" eingesetzt.

Auf der Abstellfläche 6 ist eine geschlossene Heiz- und/oder Kühlvorrichtung 62 vorgesehen, durch welche nicht dargestellte Speisen transportiert, gelagert, gekühlt, warmgehalten oder niedergegart werden können. Vorzugsweise ist die Heiz- und/oder Kühlvorrichtung 62 mit Peltier-Elementen versehen und in Abhängigkeit einer Stromrichtung zum Heizen oder Kühlen einsetzbar.

Der Servierwagen 1" ist ebenfalls über eine nicht dargestellte Leitung an eine Stromquelle für den Betrieb des Glaskeramikkochfelds 9 und/oder der Heiz- und/oder Kühlvorrichtung 62 anschließbar.

Die dargestellten Ausführungsformen sind exemplarisch. Die Merkmale der einzelnen Servierwagen 1. 1', 1" sind auch in anderer Weise miteinander verbindbar. So sind in anderen Ausführungsformen beispielsweise auch bei den Servierwagen 1', 1" gemäß Fig. 2 und 3 Abstellflächen ohne erhöhten Rand vorgesehen und/oder die Heiz- und/oder Kühlvorrichtung 62 gemäß Fig. 3 auf den Abstellflächen der Servierwagen 1, 1' gemäß Fig. 1 angeordnet.

## Patentansprüche

1. Servierwagen mit mindestens einer Arbeitsfläche (5, 5', 5") und mindestens einer unterhalb der Arbeitsfläche (5, 5', 5"), parallel zu dieser angeordneten Abstellfläche (6, 6'), wobei in die Arbeitsfläche (5, 5', 5") mindestens eine Einrichtung zum Warmhalten, Zubereiten und/oder Kühlen von Speisen integriert ist, **dadurch gekennzeichnet, dass** die Einrichtung einen Behälter (8, 8') aus einem Mehrschichtmaterial mit hoher Wärmeleitfähigkeit aufweist..

2. Servierwagen nach Anspruch 1, **dadurch gekennzeichnet, dass** der Behälter (8, 8') lösbar in die Arbeitsfläche (5, 5') eingesetzt ist.

3. Servierwagen nach Anspruch 1 oder 1, **dadurch gekennzeichnet, dass** der Behälter (8, 8') im Gastronorm-Format ausgeformt ist.

4. Servierwagen nach einem der vorstehenden Ansprüche, **dadurch gekennzeichnet, dass** der Behälter (8') mit einer Antihaftschicht, insbesondere mit Polytetrafluorethylen, beschichtet ist.

5. Servierwagen nach einem der vorstehenden Ansprüche, **dadurch gekennzeichnet, dass** auf der Abstellfläche (6, 6') unterhalb des Behälters (8) eine Heiz- und/oder Kühleinrichtung zum Erwärmen oder Kühlen des Behälters (8) vorgesehen ist.

6. Servierwagen nach einem der vorstehenden Ansprüche, **dadurch gekennzeichnet, dass** der Behälter (8) mit einer Heiz- und/oder Kühleinrichtung (80) versehen ist.

7. Servierwagen nach Anspruch 5 oder 6, **dadurch gekennzeichnet, dass** die Kühleinrichtung einen Kompressor und einen Verdampfer, mindestens ein Peltier-Element und/oder ein herausnehmbares Kältespeicherelement aufweist.

8. Servierwagen nach Anspruch 5 oder 6, **dadurch gekennzeichnet, dass** die Heizvorrichtung (80) eine elektrische Widerstandsheizung oder ein Induktionsgenerator zur induktiven Erwärmung des Behälters (8') ist.

9. Servierwagen nach Anspruch 1, **dadurch gekennzeichnet, dass** die Einrichtung eine beheizbare Glaskeramikkochplatte (9) ist.

10. Servierwagen nach einem der vorstehenden Ansprüche, **dadurch gekennzeichnet, dass** auf der Abstellfläche (6, 6') eine geschlossene Heiz- und/oder Kühlvorrichtung (62) zum Transportieren, Lagern, Kühlen, Warmhalten und/oder Niedergaren von Speisen vorgesehen ist.

11. Servierwagen nach Anspruch 10, **dadurch gekennzeichnet, dass** die Kühlvorrichtung (62) einen Kompressor und einen Verdampfer, wenigstens ein Peltier-Element oder ein Kältespeicherelement enthält.

12. Servierwagen nach einem der vorstehenden Ansprüche, **dadurch gekennzeichnet, dass** der Servierwagen (1, 1', 1") Transportrollen (2), vorzugsweise vier Transportrollen, aufweist.

13. Servierwagen nach einem der vorstehenden Ansprüche, **dadurch gekennzeichnet, dass** der Servierwagen (1, 1', 1 ") zwei Abstellflächen (6, 6') aufweist.

14. Servierwagen nach einem der vorstehenden Ansprüche, **dadurch gekennzeichnet, dass** mindestens eine Abstellfläche (6) mit einem erhöhten Rand (60) ausgeformt ist.
